Europäisches Patentamt

European Patent Office

Office européen des brevets

(11) Publication number: **0 181 124**
A2

# (12) EUROPEAN PATENT APPLICATION

(21) Application number: 85307667.7

(22) Date of filing: 24.10.85

(51) Int. Cl.⁴: **G 02 B 23/10**
G 02 B 23/12, G 02 B 27/32
G 02 B 27/34, G 02 B 27/36

(30) Priority: 25.10.84 GB 8427054

(43) Date of publication of application:
14.05.86 Bulletin 86/20

(84) Designated Contracting States:
AT BE CH DE FR GB IT LI NL SE

(71) Applicant: SCHLUMBERGER ELECTRONICS (U.K.)
LIMITED
124 Victoria Road
Farnborough Hampshire GU14 7PW(GB)

(72) Inventor: Laciny, Richard Wenceslas
46 Woodcroft Avenue
Mill Hill London NW7 2AG(GB)

(74) Representative: Holt, Michael
Schlumberger Electronics (UK) Limited 124 Victoria Road
Farnborough Hampshire GU14 7PW(GB)

(54) Imaging system.

(57) In an imaging system suitable for example for use as a firearm night sight a primary object viewable from viewing position (10) is formed by objective optics (17) and an image intensifier tube output face (11). A secondary image is formed by edgewise illumination of a glass plate (15), the plate (15) carrying a diffusion graticule pattern. Both images are formed in monochromatic light at chromatically separate wavelengths. A glass plate (18) has a dichroic surface (19) transmissive to the wavelength of light from the secondary object (14). Both lengths from the primary object to dichroic surface ($Z_2$) are arranged to be optically equal, so that superimposed images may be viewed. The invention provides a correctly focussed secondary image without optical components close to the intensifier output face or off axis image projection.

FIG.2

IMAGING SYSTEM                    (46.769/2460p)


This invention relates to imaging systems, and in particular to imaging systems wherein a secondary object is superimposed upon a view of a primary object, such as in a gun sight wherein an aiming graticule is superimposed on a view of a target area.

In many imaging systems, such as a gun sight for use at night, the primary object is not a direct view of a target area, but is itself an image of a scene obtained for example via an image intensifier or low light television techniques. In such an arrangement the object will be formed as a projection on a physical surface such as the output face of an image intensification tube or a cathode ray tube face, with the attendant disadvantage that the secondary object cannot be placed physically coincident with the primary object. Thus in systems which employ a secondary image formed by selective diffusion of totally internally relected light launched edgewise into a glass block, the images can never be exactly in focus, which leads to degraded sighting performance. An additional problem in systems used on firearms for sighting is that closely proximate optical components are at risk of damage during the shock and vibration of recoil.

An alternative approach is to form the secondary image at an off axis distance from the viewing position optically equal to the primary object to image separation and to superimpose the images by means of a combiner, such as an inclined half silvered mirror. This arrangement, although providing correctly focussed images, has the disadvantage of combiner loss and is inconvenient in some applications since the secondary image must be formed off axis. Launching a secondary image off axis is not desirable in a gun sight since system components must necessarily be placed to the side of the sight line, leading to a bulky and unbalanced sight.

According to the present invention, an imaging system wherein a focussed image for viewing at a viewing position is formed of a primary object at an object plane includes:

means for forming a secondary object in the path of light from the object to the image,

and an optical element intermediate the primary and secondary object locations such that light from the primary object is incident on a face of the element and light from the secondary object is incident on an opposite face of the element;

the element having a wavelength dependent transmission/reflection characteristic such that it is transmissive at a wavelength of light from the primary object and reflective at a wavelength of light from the secondary object,

the spacing between the elements and the secondary object being such that a virtual image of the secondary object is formed at substantially the object plane so that both objects may be viewed as superimposed focussed images.

Preferably the objects are light emissive. The secondary object may be formed on a surface which is transmissive to light from the first object, advantageously a surface of a glass block on to which the object pattern is ground to form a diffusion region, the block being illuminated edgewise to form the image by selective diffusion. The surface may be made movable for boresight adjustment. Preferably the optical element is axially movable for focus adjustment.

In a preferred form of the present invention the objects are formed at chromatically separate wavelengths, each advantageously emitting light within a narrow band of wavelengths. The objects may be substantially monochromatic. Preferably the optical element provides a dichroic surface selectively reflective and transmissive as hereinbefore described.

In order that features and advantages of the present invention may be appreciated, an embodiment will now be described, by way of example only and with reference to the accompanying diagrammatic drawings, of which:-

Figure 1, represents an imaging system in accordance with the present invention, and

Figure 2 represents a typical installation for a weapon night sight.

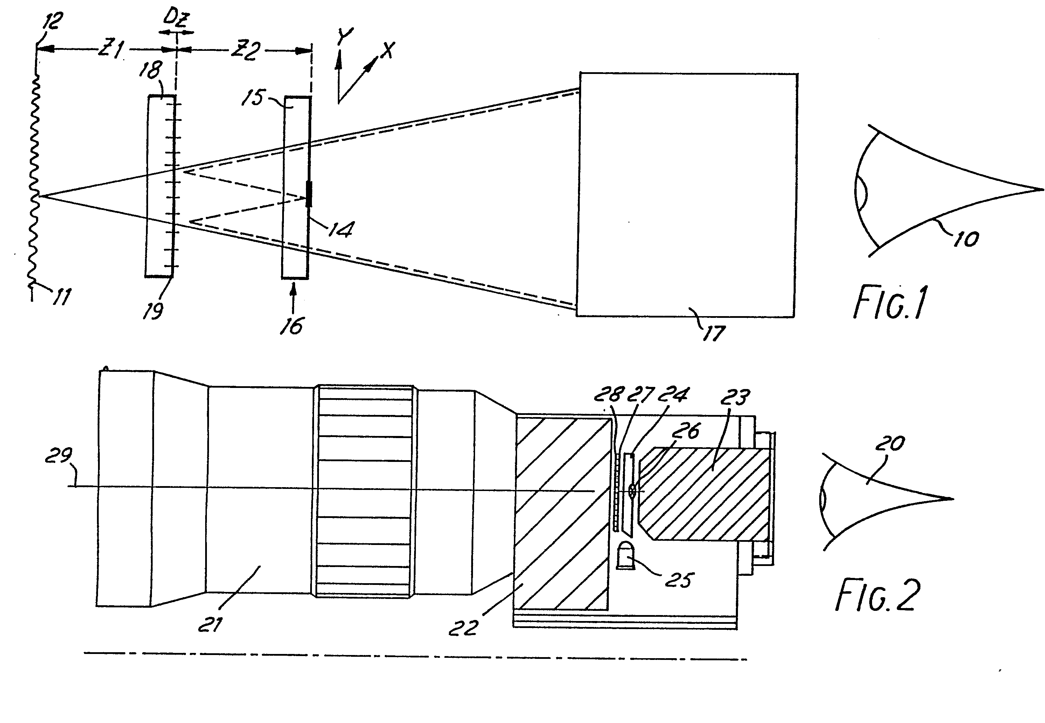

In an imaging system (Fig. 1) a focussed image for viewing at a viewing position 10 is formed of a primary object 11 at an object plane 12 by an optical train 17. A secondary object 14 is formed in the path of light from the object 11 to the image as a diffusion region on a light transmissive glass plate 15. The plate is edgewise illuminated by a light source (not shown) from a direction 16. Light from the source is internally reflected until the diffusing surface is met, whereupon light is reflected in all directions to form the object 14. Such object formation is known in the art, and is well suited to formation of a small but well resolved secondary image such as a gun sight graticule.

Intermediate the object plane 12 and the secondary object 14 is an optical element 18 having a wavelength selective tranmission/reflection characteristic arranged such that the element is transmissive to light of a wavelength from the primary object and reflective, at a surface 19, to light of a wavelength from the secondary object. The primary object 11 and secondary object 14 are each light emissive over a narrow band of chromatically separated wavelengths. The primary object is substantially green being formed by the emission of known phosphor at the output face of an image intensifier tube, comprising a narrow band of wavelengths in the region of 550 nm. The secondary object is substantially red by virtue of illumination of the diffuser plate 15 by light having a wavelength in the region of 600 nm. The optical element 15 exhibits red/green dichromism at surface 19.

Dichroic elements are known in the art and a suitable element may be formed by the known technique of successive depositions of colour selective layers on the surface of a glass plate. In the present embodiment the optical element 18 has the property of 80 - 90% transmission to green from the intensifier tube, and 80 - 90% reflection of red from the graticule.

Light from the secondary image 14 is reflected by dichroic surface 19 acting as a plane mirror to form a virtual image of the object on the side of the diffuser plate 15 distant from viewing positon 10. By arranging for the optical path length from object location 14 to surface 19 ($Z_2$) to be equal to the optical spacing from object plane 12 to suface 19, ($Z_1$) this virtual image will itself be formed in the plane of the primary object. Thus exactly focussed superimposed images may be observed from the viewing position 10. Focussing adjustment is provided by mechanism (not shown) imparting axial movement ($\Delta Z$) to optical element 18. Where the imaging system is used as a sight, for example for a firearm, the system must be boresighted if accuracy is to be achieved. In this embodiment boresighting is performed by movement of the diffuser plate 15 (by means not shown) in the plane (X,Y) normal to the optical axis 100.

In alternative embodiments, the physical path length from object location to dichroic surface may not be equal to the physical spacing from the object to the dichroic surface since in most materials, e.g. glass, optical path length does not equal physical path length. It will be appreciated that any thickness of the optical components may be accomodated in the present invention by choice of suitable relative physical spacings ($Z_1$ and $Z_2$).

From the foregoing description a number of advantages of the present invention will be appreciated, including the on-axis nature of the optical arrangement and the avoidance of off-axis elements with their inherent aberration problems and physical bulk, yet providing an exactly focussed graticule. Focuss and boresight adjustments are separate, and a complete three axis adjustment mechanism is not required. It will further be appreciated that there is a desirable colour contrast between the objects.

Further advantages include the ability for adjustment of the secondary image position for precise zero parallax superposition error. Additionally, when the graticule illumination is switched off, a clear and unobstructed view of the primary object is provided, without the graticule shadow remaining, as occurs in prior art systems wherein an image is formed closely proximate the primary object plane.

Systems where the primary object is formed on a curved plane, such as for example some commonly used image intensifiers may be accomodated, since adjustment of the secondary image position is facilitated in the fore-and-aft (Z) direction, it will be appreciated that this is an important advantage over prior art proximate graticules wherein the graticule cannot be moved into a position of focus if the object plane is concave. With the present invention, a concave primary image plane may be accomodated without recoarse to any image translation.

In an arrangement suitable for use as a firearm night sight (Figure 2) a primary object viewable from viewing position 20 via eye piece 23 is formed by objective optics 21 and image intensifier tube 22. A secondary image is formed by edgewise illumination of a plate 24 by light emiting diode 25, the plate 24 carrying a diffusion graticule pattern 26. Light launched from the plate 24 is superimposed on the primary image by dichroic surface 27 carried on a glass plate 28, as previously described. In use, the sight optical axis 29 is aligned with the firearm bore sight. The sight graticule may then be straightforwardly focussed, as hereinbefore described.

0181124

CLAIMS          (46.769/2461p EPO/JP)

1.    An imaging system wherein a focussed image for viewing at a viewing position is formed of a primary object at an object plane and including

means for forming a secondary object in the path of light from the object to the image,

and an optical element intermediate the primary and secondary object locations such that light from the primary object is incident on a face of the element and light from the secondary object is incident on an opposite face of the element;

the        element        having        a        wavelength        dependent transmission/reflection characteristic such that it is transmissive at a wavelength of light from the primary object and reflective at a wavelength of light from the secondary object.

the spacing between the elements and the secondary object being such that a virtual image of the secondary object is formed at substantially the object plane so that both objects may be viewed as superimposed focussed images.

2.    An imaging system as claimed in claim 1 and wherein the objects are light emissive.

3.    An imaging system as claimed in claim 1 or claim 2 and wherein the secondary object is formed on a surface which is transmissive to light from the first object.

4.    An imaging system as claimed in claim 3 and wherein the optical element is axially movable for focus or parallax adjustment.

5.    An imaging system as claimed in any preceding claim and wherein the objects are formed at chromatically separate wavelenghts.

6.    An imaging system as claimed in any preceding claim and wherein the objects are substantially monochromatic.

7.   An imaging system as claimed in any preceding claim and wherein the optical element provides a dichroic surface.

8.   An imaging system as claimed in any preceding claim and wherein the secondary object is extinguishable.

9.   An imaging system as claimed in any preceding claim and wherein the primary object is formed on a curved plane.

0181124

FIG.1

FIG.2